# EUROPEAN PATENT APPLICATION

(11) **EP 4 651 097 A1**
(43) Date of publication of application: **19.11.2025**
(21) Application number: 24176480.2
(22) Date of filing: 17.05.2024
(51) Int. Cl.: G06V 10/774, G06V 10/80, G06V 10/82, G06V 20/56, G06V 20/70

(54) **METHOD FOR DETERMINING SEMANTIC IMAGE DATA BASED ON SPATIAL CONTEXT DE-SCRIPTORS**

(71) Applicant: Bayerische Motoren Werke Aktiengesellschaft, 80809 München (DE)
(72) Inventor: Nagaraja, Naveen Shankar, 80993 Munich (DE)

(57) **Abstract**

A computer-implemented method for determining semantic image data representing a vicinity of a vehicle comprises the following steps carried out by computer hardware components: determining a 3D-image based on 3D-sensor data representing a vicinity of a vehicle; detecting a plurality of objects in the 3D-image; determining predefined spatial context descriptors for at least one of the objects; and determining, by using a machine learning model, semantic image data for the 3D-image based on the 3D-image data and the spatial context descriptors.

## Description

The present disclosure relates to methods and devices for determining semantic image data representing a vicinity of a vehicle.

Machine learning is widely applied in everyday devices and computer applications. Beyond making the applications more attractive with Artificial Intelligence (Al), AI may be used to solve real-world complex problems. One such challenge is to plan the motion of the automated vehicle (AV) on the highway in safe and effective manner. A promising approach to this problem is the application of Contrastive Language-Image Pretraining models (CLIPs) which use Artificial Neural Networks (ANN) to obtain meaningful semantic image data, i.e. image captions which describe the relevant traffic scenarios in a more precise and reliable manner. While joint training of ANNs on text and image data has shown to be powerful for various applications such as querying an image based on text prompts, it still poses a challenge to provide models which a ready to cope with the full breadth of real traffic scenarios.

It is an object of the invention to provide methods and devices for determining semantic image data with increased precision and reliability.

In one aspect, the present disclosure is directed at a computer-implemented method for determining semantic image data representing a vicinity of a vehicle, the method comprising the following steps carried out by computer hardware components: determining a 3D-image based on 3D-sensor data representing a vicinity of a vehicle; detecting a plurality of objects in the 3D-image; determining predefined spatial context descriptors for at least one of the objects; and determining, by using a machine learning model, semantic image data for the 3D-image based on the 3D-image data and the spatial context descriptors.

It has been found that predefined spatial context descriptors can greatly enhance the performance of machine learning models used for determining semantic image data. For a given object in the image spatial context descriptors can effectively represent one or more aspects of the spatial environment and/or relative position of the respective object in an explicit way. In this way, the spatial context descriptors can provide significant support in focussing the performance of the machine learning model to spatial aspects which are relevant for automatic and reliable analysis of massive amounts of traffic scenes in 3D-image data in real time.

Further aspects are disclosed in the description, the figures and the claims.

According to an embodiment the machine learning model comprises an artificial neural network (ANN) configured to determine the semantic image data as text output based on the 3D-image data and the spatial context descriptors. Preferably, the ANN receives text input, e.g. a text prompt for retrieval of a specific semantic information in the image. However, during training of the ANN, the text input can be formed by a plurality of more general textual image captions describing semantic content of the training 3D-images. The ANN is preferably a Contrastive Language-Image Pretraining model (CLIP) but other types may also be possible.

According to an embodiment the method comprises an initial training of the ANN without using the spatial context descriptors. During a subsequent retraining of the ANN the spatial context descriptors are used. Such twofold training is useful for adapting existing ANNs which have been trained on extensive training data without the proposed spatial context descriptors. Retraining of these models have been found to be very effective in boostering their performance.

The 3D-sensor data representing the vicinity of the vehicle can generally be acquired by one or more sensors mounted in the vehicle, for example a radar sensor, a lidar sensor or another sensor type configured to capture 3D-data.

According to an embodiment the spatial context descriptors comprise a location descriptor representing a position of a first object with respect to a second object and/or the 3D-image. In this way, each location descriptor describes the relative position of an object. Preferably, the location descriptor comprises a binary classification of the position, which effectively reduces the complexity of the positional data. For example, the location descriptor can be formulated as <object A is left from object B>. The positional reference for determining the location descriptor can be given by a Cartesian coordinate system with origin placed on the respective object. Alternatively or additionally, the coordinate system of the 3D-image or an (ego-) vehicle carrying one or more sensors for acquiring the 3D-sensor data can be used as positional reference for the location descriptors.

According to another embodiment the spatial context descriptors comprise a quantity descriptor representing a quantity of objects that share a common property with respect to at least one of the plurality of objects and/or the 3D-image. For example, the quantity descriptor can include an information on how many vehicles are present on a certain lane, on all lanes or even in the complete scene of the 3D-image. Thus, the common property can refer to an object class (e.g. a vehicle, a pedestrian, a traffic light, a bridge, etc.), wherein the quantity of objects of a respective class is expressed with respect to a given object (i.e., a specific lane). Alternatively, the common property can be a relative position. For example, the quantity descriptor can include an information on how many vehicles are present in a certain direction from the ego vehicle. In a specific example, the quantity descriptor states that there are currently <two vehicles left from the ego vehicles The quantity descriptor is preferably formed by text, which simplifies joint model use and training with other textual image captions.

According to an embodiment the spatial context descriptors consist of location descriptors and quantity descriptors for at least some of the plurality of objects. These two types can be effective enough for raising the model performance significantly. The location descriptors and quantity descriptors are preferably determined according to an embodiment as described.

The step of detecting the plurality of objects preferably comprises segmentation of the 3D-image and classifying pixels of the 3D-image representing the plurality of objects into one of a plurality of object classes. In this way, one or more objects can be detected, i.e. localised in the 3D-image and classified with respect to one or more object classes. Object classes preferably include at least vehicles, pedestrians, and lanes. It is understood that further object classes can be foreseen for moving objects (e.g. cyclists, lorries, trains, barriers) and stationary objects (lane markings, traffic signs and lights, guide rails, etc.). The step of detecting the plurality of objects is preferably carried out as auto-labelling using foundation models like Segment Anything (SAM) and GroundingDINO, which are known from the prior art. However, other state-of-the-art models can be used as well with equal or similar effect.

In another aspect, the present disclosure is directed at a computer system, said computer system comprising a plurality of computer hardware components configured to carry out several or all steps of the computer-implemented method described herein.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer-implemented method in the computer system. The non-transitory data storage and/or the memory unit may comprise a computer program for instructing the computer system to perform several or all steps or aspects of the computer-implemented method described herein, for example using the processing unit and the at least one memory unit.

In another aspect, the present disclosure is directed at a vehicle comprising said computer system and at least one sensor for acquiring 3D-sensor data. In one embodiment the computer system is connected to a plurality of image sensors mounted at the vehicle, wherein the computer system receives the 3D-sensor data from the sensors and performs sensor fusion on the sensor data to obtain the 3D-image data with greater resolution and quality. The image sensors preferably include a radar sensor and a lidar sensor.

According to an embodiment the computer system is further configured to generate at least one instruction for automated driving of the vehicle based on the semantic image data. For example, the semantic image data can comprise information on a traffic jam in front of the vehicle so that the computer systems generated a break instruction for slowing down the vehicle.

In another aspect, the present disclosure is directed at a non-transitory computer readable storage comprising instructions which, when executed by a processor, cause (or make) a processor of a computer system to carry out several or all steps or aspects of the computer-implemented method described herein. The computer readable storage may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable storage may be configured as a data storage that is accessible via a data connection, such as an internet connection. The computer readable storage may, for example, be an online data repository or a cloud storage.

The present disclosure is also directed at a computer program for instructing a computer system to perform several or all steps or aspects of the computer-implemented method described herein.

Exemplary embodiments and functions of the present disclosure are described herein in conjunction with the following drawings, showing schematically:
Fig. 1 a schematic flow chart of a method for determining semantic image data according to one aspect of the disclosure;
Fig. 2 an exemplary traffic scene from the perspective of an ego vehicle;
Fig. 3 a computer system for carrying out the method from Fig. 1;
Fig. 4 a schematic diagram illustrating aspects of training an ANN for the method from Fig. 1; and
Fig. 5 a schematic diagram illustrating aspects of operating an ANN according to the method from Fig. 1.

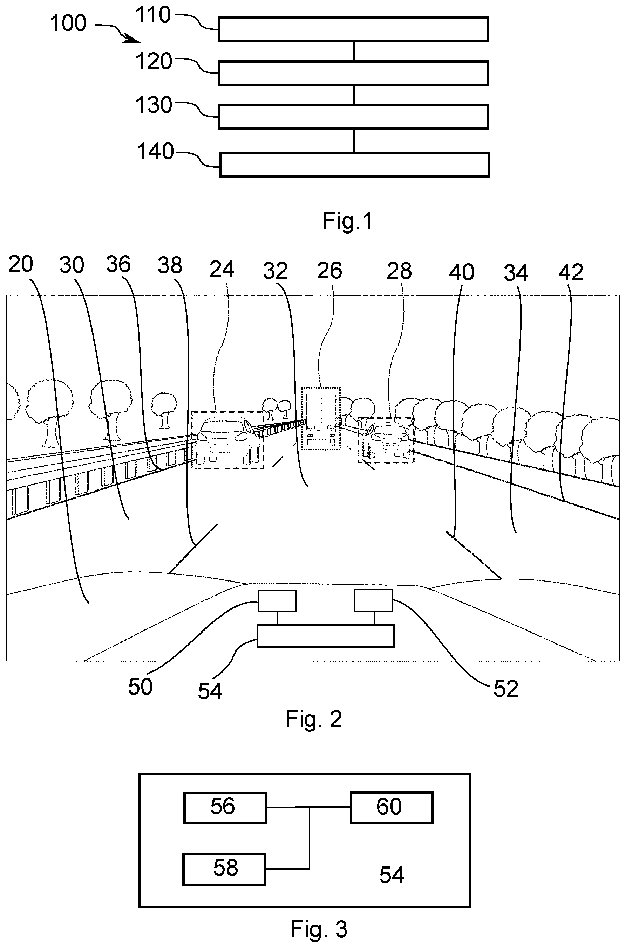

A computer-implemented method 100 for determining semantic image data representing a vicinity of a vehicle comprises the following steps as illustrated in Fig. 1. In step 110 a 3D-image of the vicinity of a vehicle, e.g. ego vehicle 20 from Fig. 2, is determined based on 3D-sensor data representing the vicinity of the vehicle. Then, a plurality of objects are detected in the 3D-image (step 120) and predefined spatial context descriptors are determined for at least one of the objects (step 130). In step 140 a machine learning model is used to determine semantic image data for the 3D-image based on the 3D-image data and the spatial context features. The skilled person understands that the steps of the method 100 can be repeated and/or carried out simultaneously for several sets of 3D-sensor data.

Each of the steps 110,120,130,140, and further steps described above may be performed by computer hardware components. In this respect Fig. 3 shows the computer system 54 with a plurality of computer hardware components configured to carry out the steps of the computer-implemented method for determining semantic image data based on an ANN, as generally described in connection with Fig. 1. The computer system 54 may include a processor 56, a memory 60, and a non-transitory data storage 58. The processor 56 may carry out instructions provided in the memory 60. The non-transitory data storage 58 may store a computer program, including the instructions that may be transferred to the memory 60 and then executed by the processor 56. The processor 56, the memory 60, and the non-transitory data storage 58 may be coupled with each other, e.g. via an electrical connection, such as, e.g., a cable or a computer bus or via any other suitable electrical connection to exchange electrical signals. The terms "coupling" or "connection" are intended to include a direct "coupling" (for example via a physical link) or direct "connection" as well as an indirect "coupling" or indirect "connection" (for example via a logical link), respectively.

Fig. 2 shows an exemplary image scene from the perspective of an ego vehicle 20 equipped with a radar sensor unit 50 and a lidar sensor unit 52. Both sensor units 50 and 52 are positioned and configured to acquire 3D-sensor data from the vicinity in front of the ego vehicle 20, thereby capturing the driver-like field of view as shown in Fig. 2. The sensor units 50 and 52 are connected to a computer system 54 configured to process the 3D-sensor data from the sensor units 50 and 52 and to carry out the method 100 for determining the semantic image data encoded in the 3D-sensor data.

The image scene of Fig. 2 includes a plurality of objects relevant in view of maneuvering the ego vehicle 20 in an automated way, i.e. with reduced or even completely absent control of a human driver in the ego vehicle 20. Following determination of a 3D-image from the 3D-sensor data, the plurality of objects are detected from the 3D-image as mentioned above with respect to step 120, e.g., by using Segment Anything (SAM) and GroundingDINO algorithms known in the art. In Fig. 2 the objects include a left vehicle 24 (car), a middle vehicle 26 (truck), and a right vehicle 28 (car). Further objects are lane markings 36, 38, 40, and 42. The lane markings 36 and 38 delimit a left lane 30, the lane markings 38 and 40 delimit a middle lane 32, and the lane markings 40 and 42 delimit a right lane 34, all with respect to a coordinate system of the ego vehicle 20. The lanes 30, 32, and 34 also represent objects in the sense of the present disclosure. It is understood that further or other object classes can be detected in other traffic scenes.

As explained in view step 130 of Fig. 1, spatial context descriptors are determined for the objects. Inter alia, the spatial context descriptors include binary location descriptors defined per object with respect to one or more other objects. For example, location descriptors are determined for left vehicle 24 as <vehicle 24 is left from middle vehicle 26>, <vehicle 24 is left from right vehicle 28>, and <vehicle 24 is left from ego vehicle 20>. Further exemplary location descriptors are <vehicle 24 is behind middle vehicle 26>, <vehicle 26 is in front of ego vehicle 20>, and <vehicle 28 is in front of ego vehicle 20>.

In view of the lanes 30, 32, 34, location descriptors may include <vehicle 24 is on left lane 30> or <vehicle 24 is right from lane marking 36> or <vehicle 24 is left from lane marking 38>. Similarly, location descriptors for right vehicle 28 can include <vehicle 28 is right from lane marking 40> and <vehicle 28 is right from lane marking 42>.

In addition to location descriptors, the spatial context descriptors include quantity descriptors, which may also be understood as unary or count descriptors. They quantify the number of objects sharing a common property. For example, in Fig. 2, the quantity descriptor for object class <vehicle> is equal to four (including the ego vehicle 20 as one object). The quantity descriptor can also be restricted to a positional relation to another object. For example, the quantity descriptor for the number of vehicles on lane 30 is equal to one. Another example is the number of vehicles right from vehicle 24, which is two (excluding the ego vehicle 20). It is understood that further quantity descriptors can be defined in the same manner, for example <three vehicles are on lanes 30, 32, and 34>, excluding ego vehicle 20.

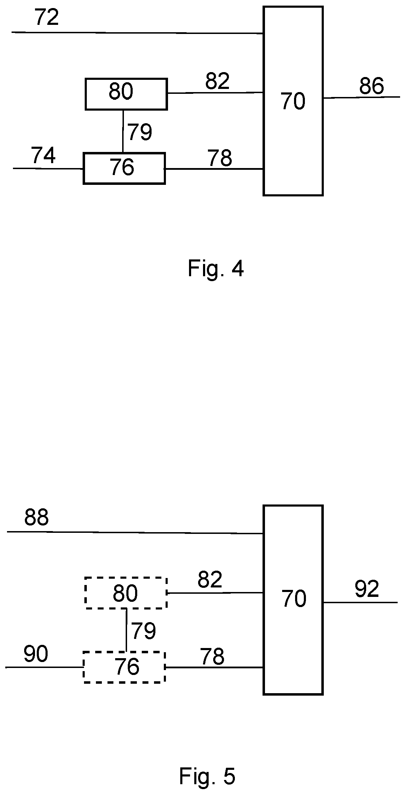

As described further above, aspects of the method can be implemented by using an ANN as a specific type of machine learning model. In this regard, Fig. 4 schematically illustrates a training scenario where an ANN 70 receives textual training image captions 72 (e.g. <vehicle in front>) and extended 3D-image data 78 (e.g. pixel data and detected objects including position an object class) as input. The extended 3D-image data 78 is determined through image segmentation and object detection in step 76 based on training 3D-images 74. Object detection data 79 (detected objects including position an object class) is further processed in spatial context determination step 80 for determining the spatial context descriptors 82. The spatial context descriptors 82 enrich the overall input data of the ANN 70. Textual training semantic output 86 is used to train the ANN 70, wherein recognition performance of ANN 70 is iteratively improved in view of precisely and reliably relating correct subsets of the training image captions 72 and the training 3D-images 74. The ANN 70 is preferably of a CLIP-model type. General training methods for ANN 70 may be used from the prior art.

In an operational use scenario shown in Fig. 5 a text prompt 88 and an image prompt 90 are fed into trained ANN 70. The image prompt 90 consists of a 3D-image that is processed in segmentation and object detection step 76 to obtain the extended 3D-image data 78. Additionally, the object data 79 is processed in spatial context determination step 80 to obtain the spatial context descriptors 82 as described with respect to Fig. 1 to Fig. 4.

Steps 76 and 80 are indicated in broken lines in Fig. 5 to indicate that these steps do not necessarily need to be carried out as dedicated preprocessing steps but can be performed by ANN 70 itself, e.g. by sub-nets inside the ANN 70. The ANN 70 determines textual semantic output 92 related to the text prompt 88. For example, the text prompt 88 can be <How many vehicles are in front of ego vehicle on the same lane?>. For the image prompt 90 representing the traffic scene from Fig. 2 the semantic output 92 can be <one>. The predefined spatial context descriptors greatly enhance the precision and reliability of the text prompt 90 in view of basic but relevant positional characteristics of various objects in the given image prompt 90.

### List of Reference Signs

- 20: ego vehicle
- 24: left vehicle
- 26: front vehicle
- 28: right vehicle
- 30: left lane
- 32: middle lane
- 34: right lane
- 36: lane marking
- 38: lane marking
- 40: lane marking
- 42: lane marking
- 50: radar-sensor unit
- 52: lidar-sensor unit
- 54: computer system
- 56: processor
- 58: non-transitory data storage
- 60: memory
- 70: ANN
- 72: training image captions
- 74: training 3D-images
- 76: object detection
- 78: extended 3D-image data
- 79: object detection data
- 80: spatial context determination
- 82: spatial context descriptors
- 86: training semantic output
- 88: text prompt
- 90: image prompt
- 92: semantic output
- 100: method
- 110: determining a 3D-image
- 120: detecting objects
- 130: determining spatial context descriptors
- 140: determining semantic image data

## Claims

1. Computer-implemented method for determining semantic image data representing a vicinity of a vehicle (20), the method comprising the following steps carried out by computer hardware components:
determining a 3D-image based on 3D-sensor data (110) representing a vicinity of a vehicle (20);
detecting a plurality of objects in the 3D-image (120);
determining predefined spatial context descriptors for at least one of the plurality of objects (130); and
determining, by using a machine learning model, semantic image data for the 3D-image based on the 3D-image data and the spatial context descriptors (140).

2. Computer-implemented method of claim 1, wherein the machine learning model comprises an artificial neural network (70) configured to determine the semantic image data as text output (86, 92) based on the 3D-image data (74, 90), the spatial context descriptors (82) and text input (72, 88), the artificial neural network (70) model preferably being a Contrastive Language-Image Pretraining model.

3. Computer-implemented method of claim 2, comprising an initial training of the artificial neural network (70) without using the spatial context descriptors (82), and further comprising a retraining of the artificial neural network (70) with using the spatial context descriptors (82).

4. Computer-implemented method of at least one of the preceding claims, wherein the spatial context descriptors (82) comprise a location descriptor representing a position of a first object (24) of the plurality of objects with respect to a second object (28) of the plurality of objects and/or the 3D-image.

5. Computer-implemented method of claim 4, wherein the location descriptor comprises a binary classification of the position.

6. Computer-implemented method of at least one of the preceding claims, wherein the spatial context descriptors (82) comprise a quantity descriptor representing a quantity of the plurality objects (24, 26, 28) that share a common property with respect to at least one of the plurality of objects (24, 26, 28) and/or the 3D-image.

7. Computer-implemented method of claim 6, wherein the common property is an object class or a relative position.

8. Computer-implemented method of at least one of claims 4 to 7, wherein the spatial context descriptors (82) consist of location descriptors and quantity descriptors for at least some of the plurality of objects (24, 26, 28).

9. Computer-implemented method of at least one of the preceding claims, wherein detecting the plurality of objects (24, 26, 28) comprises segmentation of the 3D-image and classifying pixels of the 3D-image representing the plurality of objects (24, 26, 28) into one of a plurality of object classes, wherein the object classes include at least vehicles (24, 26, 28), pedestrians, and lanes (30, 32, 34).

10. Computer system (54) comprising a plurality of computer hardware components (56, 58, 60) configured to carry out at least some steps of the computer-implemented method of a least one of the preceding claims.

11. Vehicle (20) comprising the computer system (54) of claim 10 and at least one sensor (50, 52) for acquiring 3D-sensor data (74, 90).

12. Vehicle of claim 11, wherein the computer system (54) is further configured to generate at least one instruction for automated driving based on the semantic image data (92).

13. Non-transitory computer readable storage (58) comprising instructions for carrying out the computer-implemented method of at least one of claims 1 to 9.
